# DEMANDE DE BREVET EUROPEEN

(11) **EP 2 450 265 A1**
(43) Date de publication de la demande: **09.05.2012**
(21) Numéro de dépôt: 11187696.7
(22) Date de dépôt: 03.11.2011
(51) Int. Cl.: B62D 7/15, B62D 13/00

(54) **Système de stabilisation d' un véhicule à tracter attelé à un véhicule tracteur**

(30) Priorité: 04.11.2010 FR 1059077
(71) Demandeur: Jtekt Europe, 69540 Irigny (FR)
(72) Inventeur: Pantale, David, 69126 Brindas (FR)
(74) Mandataire: Chevalier, Renaud Philippe

(57) **Abrégé**

Ce système est remarquable en ce qu'il comporte des moyens de détection d'un mouvement de lacet du véhicule à tracter (2) agencés pour détecter un mouvement de lacet présentant une amplitude supérieure à un seuil prédéterminé au-delà duquel le véhicule à tracter (2) est susceptible de se renverser ou de fortement dégrader la conduite et la sécurité du véhicule tracteur, les moyens de détection étant configurés pour délivrer un signal de détection contenant des données relatives à l'amplitude du mouvement de lacet, un actionneur de direction des roues arrière (10) directrices du véhicule tracteur (1), des moyens de commande de l'actionneur agencés pour recevoir le signal de détection, les moyens de commande étant configurés pour délivrer à l'actionneur un angle de braquage (α) déterminé de manière à contenir l'amplitude du mouvement de lacet sous le seuil prédéterminé.

## Description

La présente invention se rapporte à un système de stabilisation d'un véhicule à tracter attelé à un véhicule tracteur ainsi qu'à un procédé de stabilisation d'un véhicule à tracter attelé à un véhicule tracteur.

Par « véhicule à tracter », on entend un véhicule notamment de type caravane ou remorque.

Par « véhicule tracteur », on entend un véhicule adapté pour tracter un véhicule à tracter.

Lorsqu'un véhicule tracteur auquel est attelé un véhicule à tracter est en situation de roulage, la mise en lacet du véhicule à tracter est une situation potentiellement dangereuse auquel cas le véhicule à tracter présente des mouvements de lacet, généralement oscillatoires, pouvant conduire à son renversement ou à une forte dégradation de la conduite et de la sécurité du véhicule tracteur.

A cet effet, il est connu de l'état de la technique d'utiliser un dispositif de détection d'un mouvement de lacet du véhicule à tracter agencé pour détecter un mouvement de lacet présentant une amplitude supérieure à un seuil prédéterminé au-delà duquel le véhicule à tracter est susceptible de se renverser ou de fortement dégrader la conduite et la sécurité du véhicule tracteur, le dispositif de détection étant configuré pour délivrer un signal de détection contenant des données relatives à l'amplitude du mouvement de lacet. Ce signal de détection est ensuite envoyé à un système de freinage du véhicule tracteur qui va appliquer une force de freinage déterminée de manière à réduire l'amplitude du mouvement de lacet. Cette solution de l'état de la technique n'est pas entièrement satisfaisante dans la mesure où le freinage du véhicule tracteur, non contrôlé par le conducteur, peut occasionner des risques de collisions selon les conditions de circulation routière.

La présente invention vise à remédier à l'inconvénient précité et concerne un système de stabilisation d'un véhicule à tracter attelé à un véhicule tracteur, le véhicule tracteur présentant des roues arrière directrices, le système de stabilisation comportant :
- des moyens de détection d'un mouvement de lacet du véhicule à tracter agencés pour détecter un mouvement de lacet présentant une amplitude supérieure à un seuil prédéterminé au-delà duquel le véhicule à tracter est susceptible de se renverser ou de fortement dégrader la conduite et la sécurité du véhicule tracteur, les moyens de détection étant configurés pour délivrer un signal de détection contenant des données relatives à l'amplitude du mouvement de lacet, le système de stabilisation étant remarquable en ce qu'il comporte :
- un actionneur de direction des roues arrière directrices du véhicule tracteur,
- des moyens de commande de l'actionneur agencés pour recevoir le signal de détection, les moyens de commande étant configurés pour délivrer à l'actionneur un angle de braquage déterminé de manière à contenir l'amplitude du mouvement de lacet sous le seuil prédéterminé.

Ainsi, un tel système de stabilisation permet de contenir l'amplitude du mouvement de lacet du véhicule à tracter sous le seuil prédéterminé par un braquage des roues arrière directrices en condition de roulage, tout en s'affranchissant d'un freinage du véhicule tracteur non contrôlé par le conducteur.

Dans un mode de réalisation, les moyens de détection comportent des moyens de détermination de la position angulaire du véhicule à tracter relativement au véhicule tracteur.

Ainsi, la détermination de la position angulaire du véhicule à tracter relativement au véhicule tracteur permet de détecter un mouvement de lacet présentant une amplitude supérieure à un seuil prédéterminé.

Selon une forme d'exécution, les moyens de détermination comportent :
- des moyens de télémétrie conçus pour émettre et recevoir au moins un signal télémétrique, les moyens de télémétrie étant destinés à équiper le véhicule tracteur, le véhicule à tracter étant adapté pour réfléchir le ou chaque signal télémétrique,
- des moyens de traitement du ou de chaque signal télémétrique réfléchi par le véhicule à tracter et reçu par les moyens de télémétrie,
- des moyens de calcul conçus pour calculer la position angulaire du véhicule à tracter relativement au véhicule tracteur à partir du ou de chaque signal télémétrique traité par les moyens de traitement, les moyens de calcul étant configurés pour délivrer le signal de détection contenant ladite position angulaire.

Selon une variante d'exécution, les moyens de détermination comportent au moins un capteur angulaire agencé pour déterminer la position angulaire du véhicule à tracter relativement au véhicule tracteur, le ou les capteurs angulaires étant configurés pour délivrer le signal de détection contenant ladite position angulaire.

Dans un mode de réalisation, le véhicule tracteur ou le véhicule à tracter présente une centrale inertielle agencée pour fournir des mesures du vecteur vitesse respectivement du véhicule tracteur ou du véhicule à tracter, et les moyens de détection comportent des moyens d'analyse configurés pour analyser les mesures du vecteur vitesse de manière à détecter un mouvement de lacet présentant une amplitude supérieure au seuil prédéterminé.

La présente invention se rapporte également à un procédé de stabilisation d'un véhicule à tracter attelé à un véhicule tracteur, le véhicule tracteur présentant des roues arrière directrices, le procédé de stabilisation étant remarquable en ce qu'il comporte les étapes consistant à :
- a) détecter un mouvement de lacet du véhicule à tracter présentant une amplitude supérieure à un seuil prédéterminé au-delà duquel le véhicule à tracter est susceptible de se renverser ou de fortement dégrader la conduite et la sécurité du véhicule tracteur,
- b) délivrer un signal de détection contenant des données relatives à l'amplitude du mouvement de lacet,
- c) prévoir un actionneur de direction des roues arrière directrices du véhicule tracteur,
- d) prévoir des moyens de commande de l'actionneur,
- e) agencer les moyens de commande pour recevoir le signal de détection,
- f) configurer les moyens de commande pour délivrer à l'actionneur un angle de braquage déterminé de manière à contenir l'amplitude du mouvement de lacet sous le seuil prédéterminé.

Selon un mode de mise en oeuvre, l'étape a) comporte une étape consistant à déterminer la position angulaire du véhicule à tracter relativement au véhicule tracteur.

Selon une variante de mise en oeuvre, l'étape a) comporte les étapes consistant à :
- équiper le véhicule tracteur ou le véhicule à tracter d'une centrale inertielle fournissant des mesures du vecteur vitesse respectivement du véhicule tracteur ou du véhicule à tracter,
- analyser les mesures du vecteur vitesse de manière à détecter un mouvement de lacet présentant une amplitude supérieure au seuil prédéterminé.

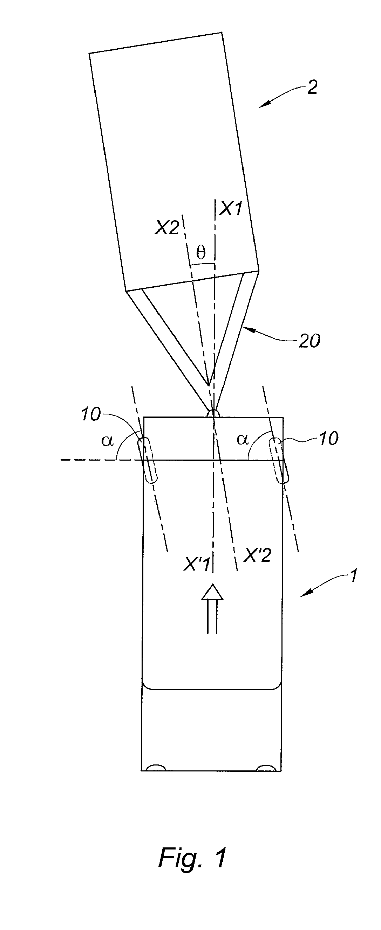

D'autres caractéristiques et avantages apparaîtront dans la description qui va suivre d'un mode de réalisation d'un système de stabilisation selon l'invention, donné à titre d'exemple non limitatif, en référence aux dessins annexés dans lesquels la figure 1 est une vue schématique de dessus d'un système de stabilisation selon l'invention.

Le système de stabilisation illustré à la figure 1 est un système de stabilisation d'un véhicule à tracter 2 attelé à un véhicule tracteur 1 par un timon d'attelage 20.

Le véhicule tracteur 1 présente des roues arrière 10 directrices. Le véhicule tracteur 1 présente un axe médian longitudinal X'1-X1. Le véhicule à tracter 2 présente un axe médian longitudinal X'2-X2.

Le système de stabilisation comporte des moyens de détection d'un mouvement de lacet du véhicule à tracter 2 agencés pour détecter un mouvement de lacet présentant une amplitude supérieure à un seuil prédéterminé au-delà duquel le véhicule à tracter 2 est susceptible de se renverser ou de fortement dégrader la conduite et la sécurité du véhicule tracteur.

Les moyens de détection sont configurés pour délivrer un signal de détection contenant des données relatives à l'amplitude du mouvement de lacet.

A cet effet, les moyens de détection comportent des moyens de détermination de la position angulaire du véhicule à tracter 2 relativement au véhicule tracteur 1. La position angulaire est définie par l'angle θ formé par l'axe médian longitudinal X'1-X1 du véhicule tracteur 1 et l'axe médian longitudinal X'2-X2 du véhicule à tracter 2.

Les moyens de détermination sont configurés pour délivrer le signal de détection contenant ladite position angulaire. Le signal de détection contient ainsi l'information sur la valeur instantanée de l'angle θ.

Le système de stabilisation comporte en outre :
- un actionneur (non représenté) de direction des roues arrière 10 directrices du véhicule tracteur 1,
- des moyens de commande de l'actionneur agencés pour recevoir le signal de détection.

Les moyens de commande sont configurés pour délivrer à l'actionneur un angle de braquage α déterminé selon le signal de détection de manière à contenir l'amplitude du mouvement de lacet sous le seuil prédéterminé.

Lorsque le mouvement de lacet est de type oscillatoire, l'angle de braquage α déterminé conduit à un amortissement du mouvement de lacet pouvant mener à son arrêt total.

Selon une forme d'exécution non représentée, les moyens de détermination comportent :
- des moyens de télémétrie (notamment du type ultrasons, lasers ou encore infrarouges) conçus pour émettre et recevoir au moins un signal télémétrique, les moyens de télémétrie étant destinés à équiper le véhicule tracteur 1, le véhicule à tracter 2 étant adapté pour réfléchir le ou chaque signal télémétrique,
- des moyens de traitement du ou de chaque signal télémétrique réfléchi par le véhicule à tracter 2 et reçu par les moyens de télémétrie,
- des moyens de calcul, tels que le calculateur central du véhicule tracteur 1, conçus pour calculer la position angulaire du véhicule à tracter 1 relativement au véhicule tracteur 1 à partir du ou de chaque signal télémétrique traité par les moyens de traitement, les moyens de calcul étant configurés pour délivrer le signal de détection contenant ladite position angulaire.

Selon une variante d'exécution non représentée, les moyens de détermination comportent au moins un capteur angulaire agencé pour déterminer la position angulaire du véhicule à tracter 2 relativement au véhicule tracteur 1, le ou les capteurs angulaires étant configurés pour délivrer le signal de détection contenant ladite position angulaire.

Dans un mode de réalisation non représenté, le véhicule tracteur 1 ou le véhicule à tracter 2 présente une centrale inertielle agencée pour fournir des mesures du vecteur vitesse respectivement du véhicule tracteur 1 ou du véhicule à tracter 2, et les moyens de détection comportent des moyens d'analyse configurés pour analyser les mesures du vecteur vitesse de manière à détecter un mouvement de lacet présentant une amplitude supérieure au seuil prédéterminé.

Bien entendu, le mode de réalisation de l'invention décrit ci-dessus ne présente aucun caractère limitatif. Des détails et améliorations peuvent y être apportés dans d'autres variantes d'exécution sans pour autant sortir du cadre de l'invention.

## Revendications

1. Système de stabilisation d'un véhicule à tracter (2) attelé à un véhicule tracteur (1), le véhicule tracteur (1) présentant des roues arrière (10) directrices, le système de stabilisation comportant :
- des moyens de détection d'un mouvement de lacet du véhicule à tracter (2) agencés pour détecter un mouvement de lacet présentant une amplitude supérieure à un seuil prédéterminé au-delà duquel le véhicule à tracter (2) est susceptible de se renverser ou de fortement dégrader la conduite et la sécurité du véhicule tracteur (1), les moyens de détection étant configurés pour délivrer un signal de détection contenant des données relatives à l'amplitude du mouvement de lacet, le système de stabilisation étant **caractérisé en ce qu'**il comporte :
- un actionneur de direction des roues arrière (10) directrices du véhicule tracteur (1),
- des moyens de commande de l'actionneur agencés pour recevoir le signal de détection, les moyens de commande étant configurés pour délivrer à l'actionneur un angle de braquage (α) déterminé de manière à contenir l'amplitude du mouvement de lacet sous le seuil prédéterminé.

2. Système de stabilisation selon la revendication 1, **caractérisé en ce que** les moyens de détection comportent des moyens de détermination de la position angulaire (θ) du véhicule à tracter (2) relativement au véhicule tracteur (1).

3. Système de stabilisation selon la revendication 2, **caractérisé en ce que** les moyens de détermination comportent :
- des moyens de télémétrie conçus pour émettre et recevoir au moins un signal télémétrique, les moyens de télémétrie étant destinés à équiper le véhicule tracteur (1), le véhicule à tracter (2) étant adapté pour réfléchir le ou chaque signal télémétrique,
- des moyens de traitement du ou de chaque signal télémétrique réfléchi par le véhicule à tracter (2) et reçu par les moyens de télémétrie,
- des moyens de calcul conçus pour calculer la position angulaire (θ) du véhicule à tracter (2) relativement au véhicule tracteur (1) à partir du ou de chaque signal télémétrique traité par les moyens de traitement, les moyens de calcul étant configurés pour délivrer le signal de détection contenant ladite position angulaire (θ).

4. Système de stabilisation selon la revendication 2, **caractérisé en ce que** les moyens de détermination comportent au moins un capteur angulaire agencé pour déterminer la position angulaire (θ) du véhicule à tracter (2) relativement au véhicule tracteur (1), le ou les capteurs angulaires étant configurés pour délivrer le signal de détection contenant ladite position angulaire (θ).

5. Système de stabilisation selon la revendication 1, **caractérisé en ce que** le véhicule tracteur (1) ou le véhicule à tracter (2) présente une centrale inertielle agencée pour fournir des mesures du vecteur vitesse respectivement du véhicule tracteur (1) ou du véhicule à tracter (2), et **en ce que** les moyens de détection comportent des moyens d'analyse configurés pour analyser les mesures du vecteur vitesse de manière à détecter un mouvement de lacet présentant une amplitude supérieure au seuil prédéterminé.

6. Procédé de stabilisation d'un véhicule à tracter (2) attelé à un véhicule tracteur (1), le véhicule tracteur (1) présentant des roues arrière (10) directrices, le procédé de stabilisation étant **caractérisé en ce qu'**il comporte les étapes consistant à :
- a) détecter un mouvement de lacet du véhicule à tracter (2) présentant une amplitude supérieure à un seuil prédéterminé au-delà duquel le véhicule à tracter (2) est susceptible de se renverser ou de fortement dégrader la conduite et la sécurité du véhicule tracteur (1),
- b) délivrer un signal de détection contenant des données relatives à l'amplitude du mouvement de lacet,
- c) prévoir un actionneur de direction des roues arrière (10) directrices du véhicule tracteur,
- d) prévoir des moyens de commande de l'actionneur,
- e) agencer les moyens de commande pour recevoir le signal de détection,
- f) configurer les moyens de commande pour délivrer à l'actionneur un angle de braquage (α) déterminé de manière à contenir l'amplitude du mouvement de lacet sous le seuil prédéterminé.

7. Procédé de stabilisation selon la revendication 6, **caractérisé en ce que** l'étape a) comporte une étape consistant à déterminer la position angulaire (θ) du véhicule à tracter (2) relativement au véhicule tracteur (1).

8. Procédé de stabilisation selon la revendication 6, **caractérisé en ce que** l'étape a) comporte les étapes consistant à :
- équiper le véhicule tracteur (1) ou le véhicule à tracter (2) d'une centrale inertielle fournissant des mesures du vecteur vitesse respectivement du véhicule tracteur (1) ou du véhicule à tracter (2),
- analyser les mesures du vecteur vitesse de manière à détecter un mouvement de lacet présentant une amplitude supérieure au seuil prédéterminé.
